# EUROPEAN PATENT SPECIFICATION

(11) **EP 1 741 333 B1**
(45) Date of publication and mention of the grant of the patent: **16.01.2008**
(21) Application number: 05014557.2
(22) Date of filing: 05.07.2005
(51) Int. Cl.: A01K 63/00, A01K 63/04

(54) **Aquarium capable of automatically collecting, precipitating and draining sewage**
Selbstreinigende Aquariumanlage
Système d'aquarium autonettoyant

(43) Date of publication of application: 10.01.2007
(73) Proprietor: Liao, Chen Hui, Dongshih Township Taichung County (TW)
(72) Inventor: Liao, Chen Hui, Dongshih Township Taichung County (TW)
(74) Representative: Viering, Jentschura & Partner

(56) References cited:
- DE-U1- 29 806 001
- US-A- 4 988 436
- US-A- 5 640 930
- US-A- 5 965 016

## Description

### BACKGROUND OF THE INVENTION

### 1. Field of the Invention

The invention relates to an aquarium capable of automatically collecting, precipitating and draining sewage that can automatically collect, precipitate, drain sewage and change water, and can be set to drain sewage (fish dung, feeds and bait residues) 1-24 times daily before they deteriorate and filter out small sewage physically through sponge, and perform bio-decomposition through a bio-tank to replenish the aquarium to form an automatic circulation filtering condition to purify water and improve filtering effect and increase oxygen content in the water.

### 2. Description of the Prior Art

A conventional aquarium generally includes a bottom of a flat surface. Filtered water flows back to the aquarium through a water intake duct. Fish dung is deposited on the flat bottom surface with feeds and bait residues. To clear manually is burdensome. If the fish dung, feeds and bait residues not being cleared regularly, water quality deteriorates, and the health of fishes is serious affected. Survival of the fish is threatened. Hence in actual use the conventional aquarium has many problems remained to be resolved, notably:
1. One-way water flow cannot smoothly direct fish dung and other undesired substances precipitated on the bottom surface to the drain duct in the center. Water purification effect is not desirable.
2. There is no precipitation tank and sewage collection device. Only a physical filter is adopted. Water purification effect is not desirable.
3. No automatic sewage drain device. The sewage has to be cleared manually. It is tedious and time-consuming.
4. No automatic water replenishing device. Water change and replenishment have to be done regularly and manually. It is troublesome.
5. No large bio-tank. Only a little bio effect is achieved. The protein in the water cannot be decomposed thoroughly.

### SUMMARY OF THE INVENTION

In view of the aforesaid problems, the present invention aims to provide an improved aquarium that has the following features and functions:
1. Water intake ducts are provided on two sides to generate an even pressure. And a sloped surface is provided on the bottom so that sewage can be directed to a sewage collection duct in the center.
2. The sewage is collected and flows to a precipitation tank by means of overflow principle.
3. When water is changed regularly, water pump stops operation. A drain solenoid valve below the precipitation tank is activated to discharge the water and sewage from the precipitation tank.
4. After the water and sewage in the precipitation tank have been drained, the water pump is re-activated, and the drain solenoid valve is closed.
5. When the water pump delivers water, the water level drops, a water replenishing valve automatically replenishes water.
6. In addition to the functions set forth above, after first precipitation and sewage draining, a second physical filtering is performed through a sponge, and finally a bio-filtering is performed through a large bio-tank.
7. The bio-filter is located on a upper side of the aquarium to perform bio-decomposition by dripping so that even when power blackout occurs the bio-tank is not submerged in the water, and digestive microbes do not perish. And unbalance of bio-condition can be prevented.
8. The invention can be set to drain sewage 1-24 times daily.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a perspective view of a first embodiment of the invention.
FIG. 2 is a perspective view of a second embodiment of the invention.
FIG. 3 is an exploded view of the first embodiment of the invention.
FIG. 4 is a front sectional view of the first embodiment of the invention.
FIG. 5 is a side sectional view of the first embodiment of the invention.
FIG. 6 is a front sectional view of a third embodiment of the invention
FIG. 7 is a front view of the first embodiment of the invention in a filtering condition.
FIG. 8 is a side view of the first embodiment of the invention in a filtering condition.
FIG. 9 is a control process flow chart of the invention for automatic sewage draining, water replenishing and drug dispensing.

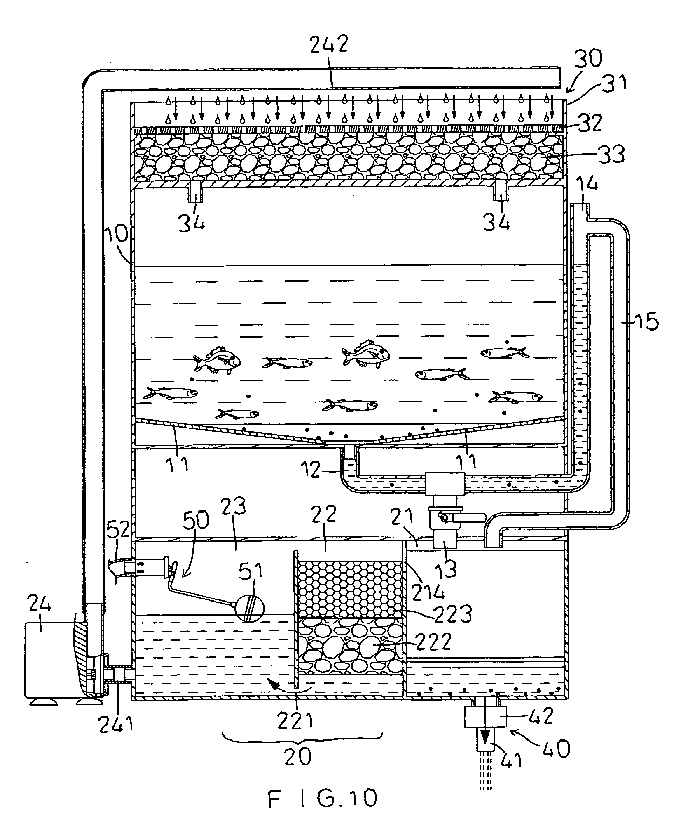

FIG. 10 is a schematic front view of the first embodiment in a sewage draining condition.
FIG. 11 is a schematic side view of the first embodiment in a sewage draining condition.
FIG. 12 is a schematic front view of the first embodiment in a water replenishing condition.

### DESCRIPTION OF THE PREFERRED EMBODIMENTS

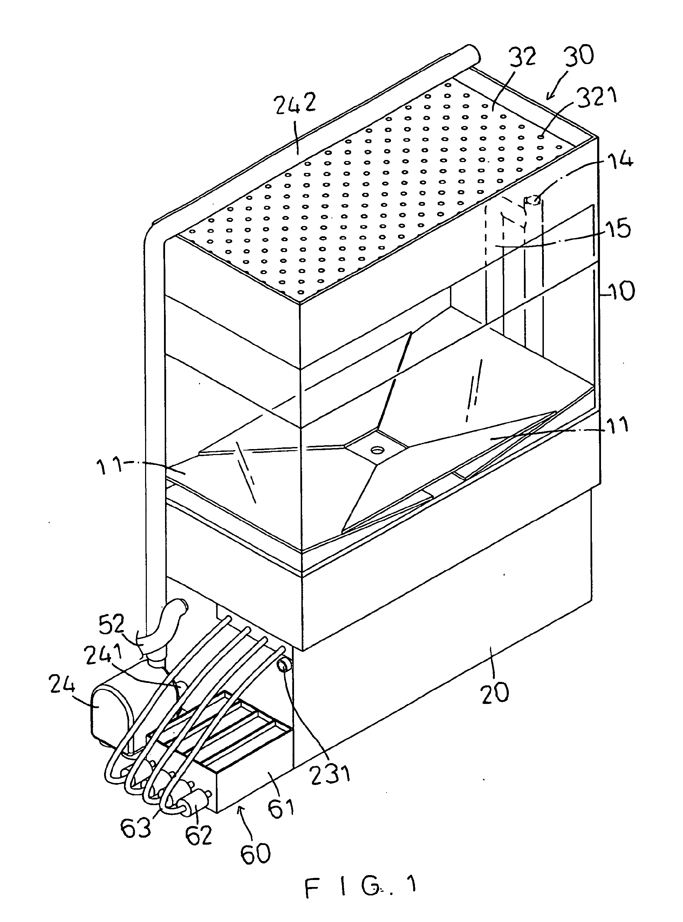

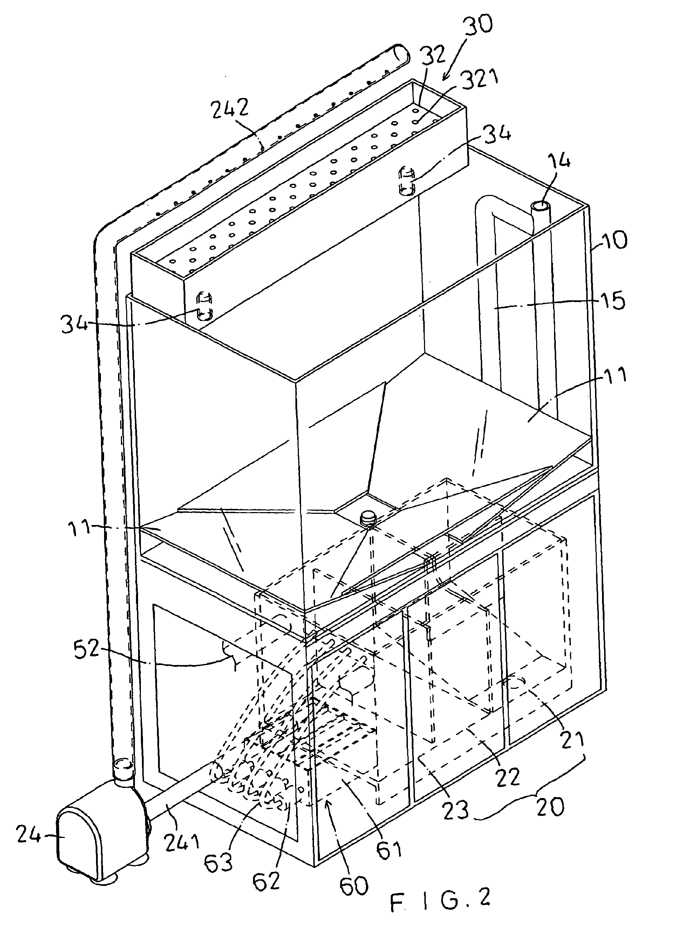

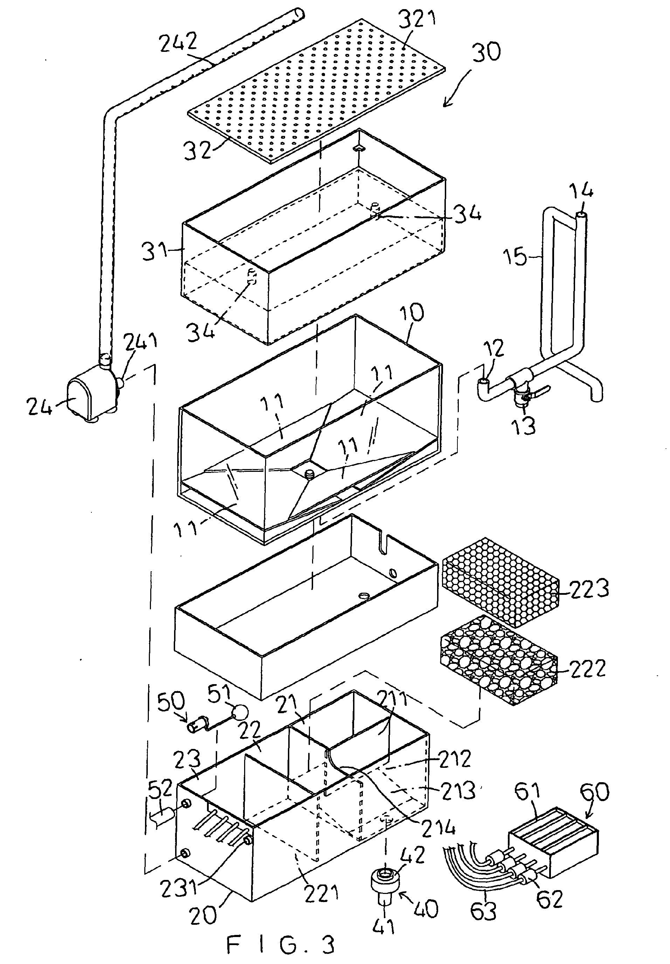

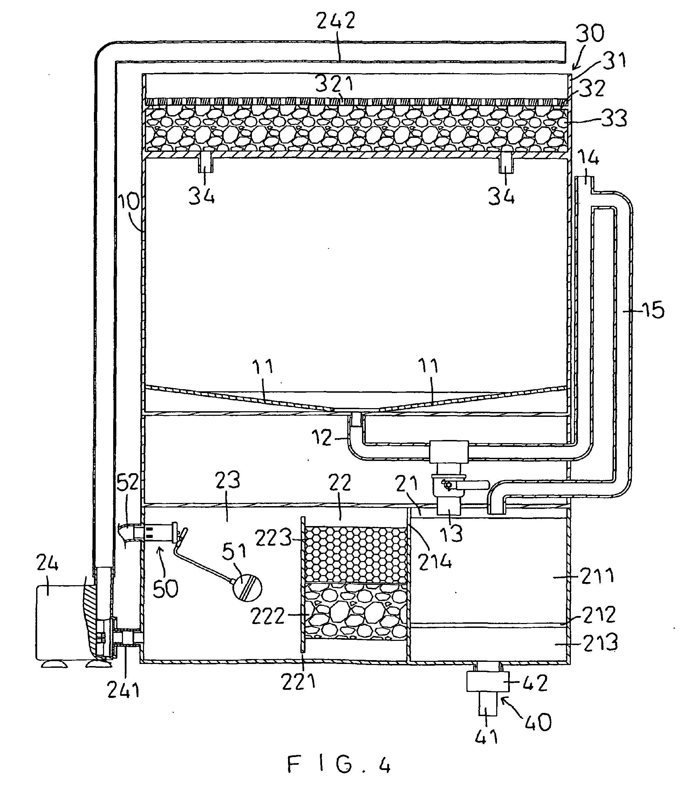

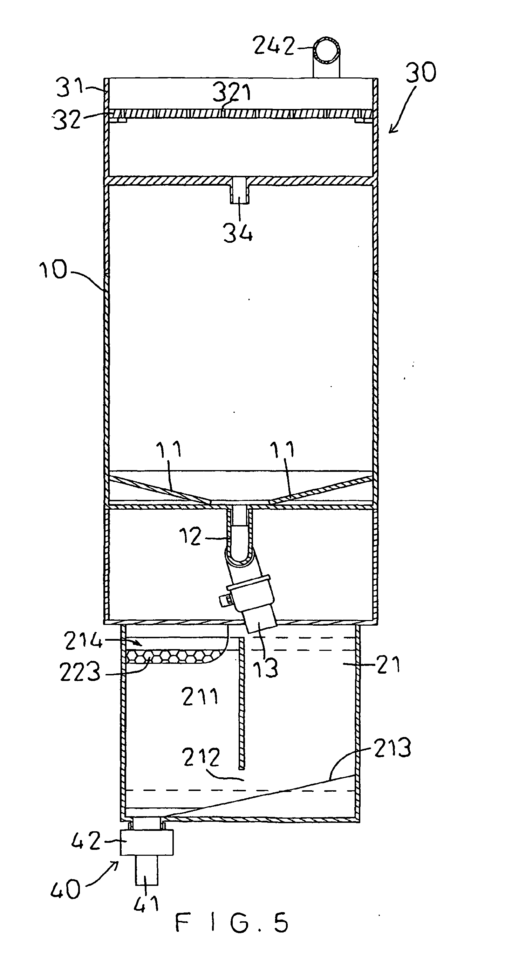

Refer to FIG. 1 for an embodiment and FIG. 2 for a second embodiment of the aquarium capable of automatically collecting, precipitating and draining sewage of the invention. FIG. 3 is an exploded view of the first embodiment, and FIGS. 4 and 5 are a front and a right side sectional views of the first embodiment. The invention includes an aquarium 10, a filter device 20, a bio-dripping device 30, a sewage draining device 40, a water replenishing device 50, and a drug dispensing device 60. The first and the second embodiments differ only in the size of the bio-dripping device 30.

The aquarium 10 has a bottom with a plurality of sloped surfaces 11 inclined towards the center. The bottom of the aquarium 10 has a sewage collection duct 12 in the center extending downwards to collect the dung and other undesired substances dropping to the sloped surfaces 11 on a lower recess in the center. The sewage collection duct 12 has a lower end extended downwards to form a discharge duct 13 to drain the sewage. The sewage collection duct 12 has anther end extended to form an air pressure duct 14 which is slightly lower than the water level of the aquarium 10. There is an overflow duct 15 on one side of the sewage collection duct 12 that is extended downwards and slightly lower than the air pressure duct 14. The overflow duct 15 directs the sewage to the filter device 20 on a lower side. The air pressure duct 14 aims to prevent the water in the aquarium 10 from fully flowing out through the sewage collection duct 12 and the overflow duct 15 during power blackout.

The filter device 20 includes a precipitation and purification tank 21, a physical purification tank 22, a water replenishing tank 23, and a water pump 24. The overflow duct 15 leads to the precipitation and purification tank 21. The precipitation and purification tank 21 has a spacer 211, a water passage 212 beneath the spacer 211, and an inclined surface 213 inclined towards the spacer 211 to allow the water in the precipitation and purification tank 21 to flow through the inclined surface 213 and the passage 212 to the sewage draining device 40. The precipitation and purification tank 21 has an opening 214 between the top thereof and the physical purification tank 22 so that water can flow through the opening 214 to the physical purification tank 22. There is another passage 221 between the bottom of the physical purification tank 22 and the water replenishing tank 23. The bottom of the physical purification tank 22 includes filter materials such as active charcoal 222, sponge 223 and the like in this order. After being filtered by layers of filter materials, water flows through the another passage 221 to the water replenishing tank 23. The water replenishing tank 23 contains the water replenishing device 50 and an overflow port 231. The water pump 24 has one end connecting to the water replenishing tank 23 through a water intake duct 241 and another end connecting to the bio-dripping device 30 through a water discharge duct 242 to send the filtered water to the bio-dripping device 30 located on the upper side.

The bio-dripping device 30 is located on a upper side of a tank 31 and has a dripping board 32 which has a plurality of dripping pores 321 to divide water into small drops. The tank 31 also contains a plurality of bio balls 33 to grow digestive microbes. The tank 31 has two water outlet ducts 34 extended from two sides of the bottom thereof to enable the water to flow back to the aquarium 10.

The sewage draining device 40 is located on the bottom of the precipitation and purification tank 21 and has a sewage drain duct 41 extended downwards. The sewage drain duct 41 contains a drain solenoid valve 42 or a ball valve (not shown in the drawings) to control opening or closing of the sewage drain duct 41 manually or automatically. When the drain solenoid valve 42 is opened, the water pump 24 stops operation through a control circuit so that the sewage can be discharged through the sewage drain duct 41. On the other hand, when the drain solenoid valve 42 is closed, the water pump 24 starts operation through the control circuit.

The water replenishing device 50 includes a water level sensor 51 located in the water replenishing tank 23 of the filter device 20. The water level sensor 51, as shown in the drawings, is an ordinary float ball switch. The water replenishing tank 23 also has water replenishing duct 52 connecting to a water supply. When the water level of the water replenishing tank 23 is lower than a selected level, the water level sensor 51 opens the water replenishing duct 52 to replenish water until the water level reaches the selected level.

The drug dispensing device 60 includes a drug tank 61 located outside the water replenishing tank 23. A motor 62 and an injection duct 63 are provided to inject a drug into the water replenishing tank 23 to regulate water quality.

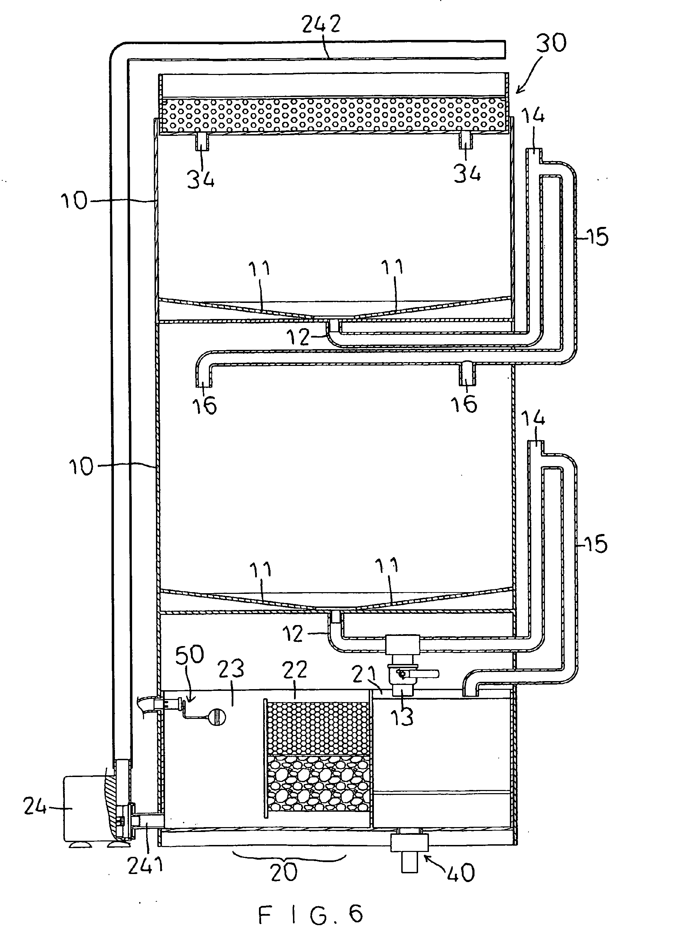

By means of the construction set forth above, referring to FIG. 6 for a third embodiment of the invention, the aquarium 10 has a upper layer and a lower layer. The sewage collection duct 12 on the upper layer has two water discharge ducts 16 in the water overflow duct 15 to direct the water to the lower layer of the aquarium 10.

The aforesaid construction provides an aquarium that can automatically collect, precipitate and drain the sewage.

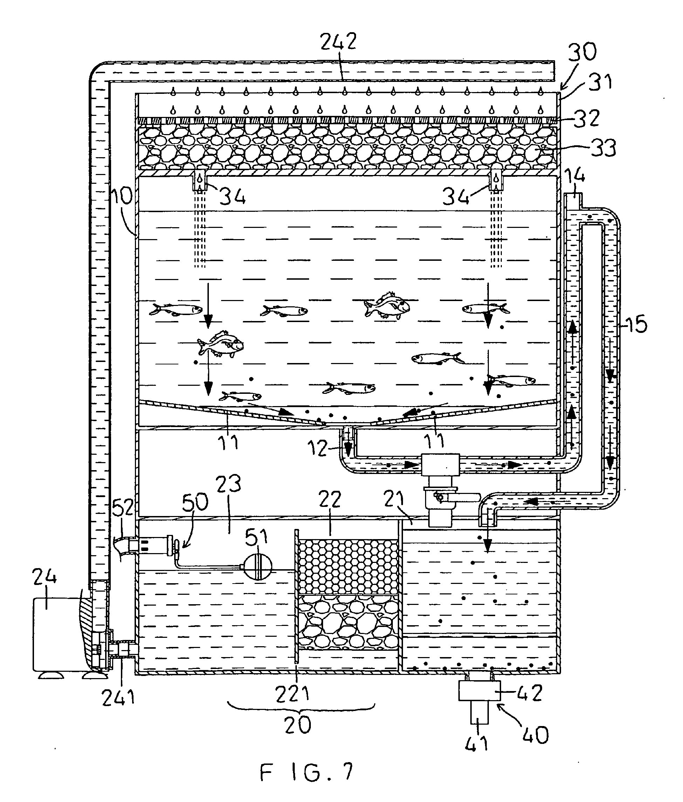

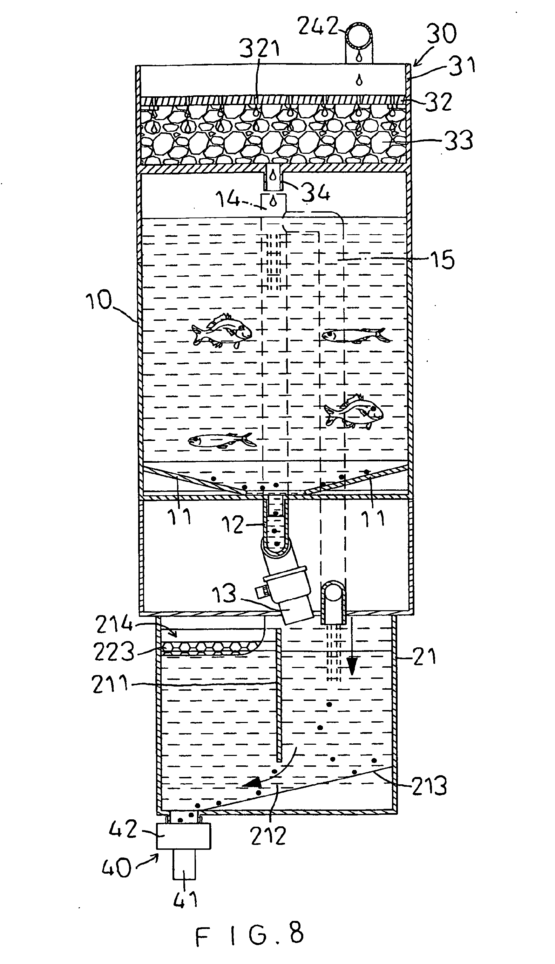

Refer to FIGS. 7 and 8 for the invention in use. During filtering, the water in the aquarium 10 moves the dung and other undesired substances on the bottom sloped surfaces 11 to the sewage collection duct 12 in the center for draining. The sewage is directed through the overflow duct 15 and the overflow duct 15 to the filter device 20 on the lower side to be filtered and purified via the precipitation and purification tank 21, and physical purification tank 22. The purified water is gathered in the water replenishing tank 23 to be sent by the water pump 24 to the bio-dripping device 30 on the upper side. The water drips through the dripping pores 321 of the dripping board 32 to become small water drops dripping to the bio balls 33 in the tank 31. Finally the water is replenished through the two water outlet ducts 34 to the aquarium 10 to form an automatic circulation filtering condition.

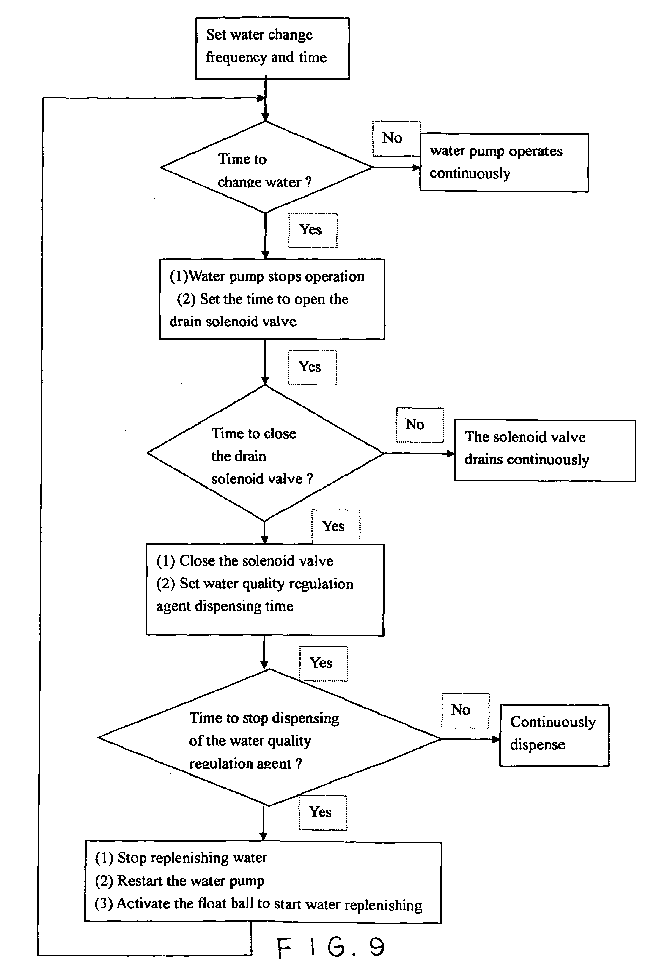

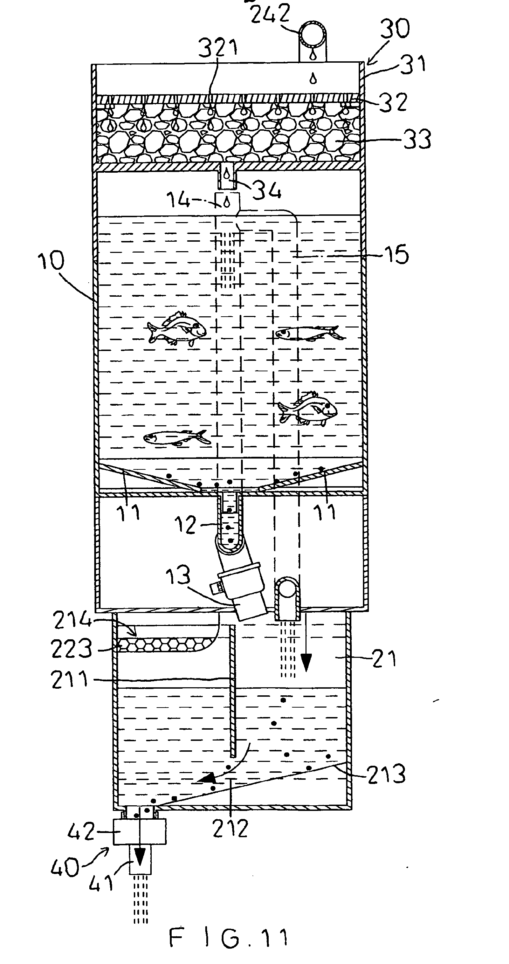

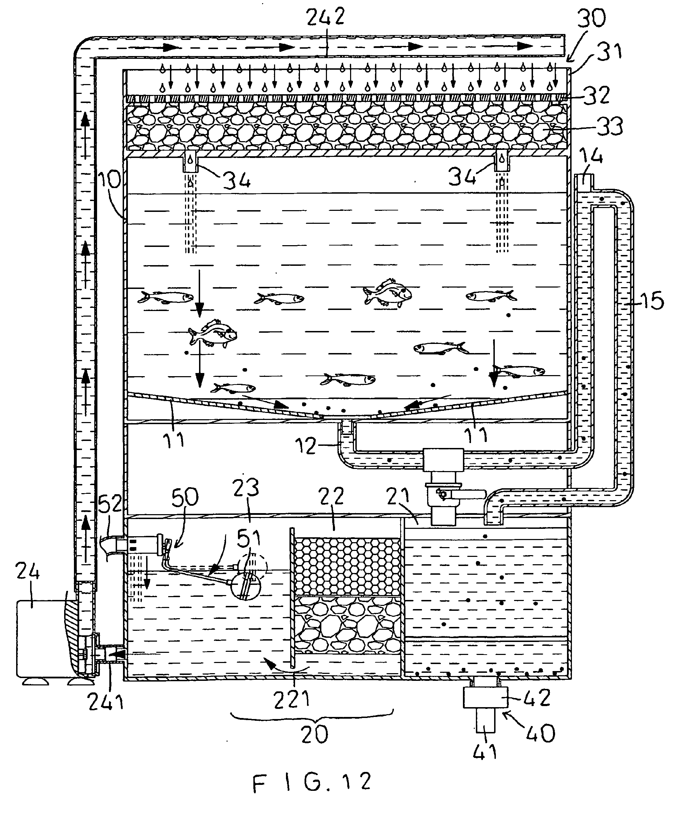

Refer to FIG. 9 for the control system flow chart of the automatic sewage draining, water replenishing and drug dispensing according to the invention. Also referring to FIGS. 11 and 12, to maintain a stable water quality, the sewage has to be drained regularly. A timer device is provided to drain the sewage 1-24 time daily. Whenever a preset time arrives, the drain solenoid valve 42 is activated and opened, the sewage in the precipitation and purification tank 21 can be discharged through the sewage drain duct 41 (meanwhile the water pump 24 stops operation) until the set time is over. Then the drain solenoid valve 42 is automatically closed (while the water pump 24 starts operation again) to resume the automatic circulation filtering condition.

Refer to FIG. 12 for an embodiment of water replenishment according to the invention. When the water level of the water replenishing tank 23 drops to a selected level, the water level sensor 51 (an ordinary float ball switch) activates the water replenishing duct 52 connecting to the water supply to replenish the water until the selected water level is reached. Then water replenishing operation stops.

## Claims

1. An aquarium that automatically collects, precipitates and drains sewage comprising a sewage collection duct and sloped surfaces on the bottom thereof directing towards the sewage collection duct, the sewage collection duct being extended upwards to form an air pressure duct lower than the water level of the aquarium and extended downwards to form an overflow duct lower than the air pressure duct, the overflow duct carrying the sewage which contains dung and undesired substances to a filter device located on a lower side of the aquarium, the filter device including at least a precipitation and purification tank and a water replenishing tank, the precipitation and purification tank having a sewage draining device on the bottom thereof and a drain duct to discharge the sewage regularly, the water replenishing tank having a water replenishing device and a water pump which sends purified water back to a water outlet duct on the top of the aquarium.

2. The aquarium of claim 1, wherein the sewage collection duct is extended downwards to form a water discharge duct.

3. The aquarium of claim 2, wherein the water discharge duct contains a drain solenoid valve which is opened and closed by a control circuit.

4. The aquarium of claim 1, wherein the precipitation and purification tank has a spacer, a passage beneath the bottom of the spacer, and an inclined surface directing towards the passage.

5. The aquarium of claim 1, wherein the filter device has a physical purifying tank between the precipitation and purification tank and the water replenishing tank.

6. The aquarium of claim 5 further having an opening between the top of the precipitation and purification tank and the physical purifying tank such that water flows through the opening to the physical purifying tank which has another passage between the bottom thereof and the water replenishing tank, and the water being filtered flowing through the another passage to the water replenishing tank.

7. The aquarium of claim 1 further having a bio-dripping device located on the top thereof, the water pump pumping the water from the water replenishing tank to the bio-dripping device.

8. The aquarium of claim 1, wherein the sewage draining device includes a drain solenoid valve which is opened and closed by a control circuit, and the water pump being activated and stopped by the control circuit.

9. The aquarium of claim 1, wherein the water replenishing device includes a water level sensor and a water replenishing duct.

10. The aquarium of claim 1, wherein the water replenishing tank contains a drug dispensing device which dispenses a drug from a drug tank into the water replenishing tank through a motor and an injection duct.

11. The aquarium of claim 1 including more than one aquarium formed in layers in a up and down manner, the aquarium on the upper layers sending water into the aquarium on the lower layers through the sewage collection duct and the overflow duct.

## Patentansprüche

1. Aquarium, das automatisch Abwasser sammelt, sedimentiert und abführt, welches einen Abwassersammelkanal und geneigte Flächen an seinem Boden aufweist, die zum Abwassersammelkanal leiten, wobei der Abwassersammelkanal aufwärts verlängert ist, um einen Luftdruckkanal zu bilden, der unterhalb des Wasserstands des Aquariums ist und sich abwärts erstreckt, um einen Überlaufkanal zu bilden, der niedriger als der Luftdruckkanal ist, wobei der Überlaufkanal das Abwasser, welches Kot und unerwünschte Substanzen enthält, einer Filtervorrichtung zuführt, die an einer unteren Seite des Aquariums gelegen ist, wobei die Filtervorrichtung mindestens einen Sedimentier- und Reinigungsbehälter und einen Wassernachfüllbehälter aufweist, wobei der Sedimentier- und Reinigungsbehälter an seinem Boden eine Abwasserabführvorrichtung sowie einen Abführkanal zum regelmäßigen Ablassen des Abwassers aufweist, wobei der Wassernachfüllbehälter eine Wassernachfüllvorrichtung und eine Wasserpumpe aufweist, die gereinigtes Wasser zurück zu einem Wasserauslasskanal oben auf dem Aquarium führt.

2. Aquarium nach Anspruch 1, wobei der Abwassersammelkanal abwärts verlängert ist, um einen Wasserabführkanal zu bilden.

3. Aquarium nach Anspruch 2, wobei der Wasserabführkanal ein Abflussmagnetventil enthält, das durch eine Steuerschaltung geöffnet und geschlossen wird.

4. Aquarium nach Anspruch 1, wobei der Sedimentier- und Reinigungsbehälter einen Abstandhalter, einen Durchlass unter der Unterseite des Abstandhalters und eine geneigte Fläche aufweist, die zum Durchlass leitet.

5. Aquarium nach Anspruch 1, wobei die Filtervorrichtung einen physikalischen Reinigungsbehälter zwischen dem Sedimentier- und Reinigungsbehälter und dem Wassernachfüllbehälter aufweist.

6. Aquarium nach Anspruch 5, das zusätzlich eine Öffnung zwischen der Oberseite des Sedimentier- und Reinigungsbehälters und dem physikalischen Reinigungsbehälter aufweist, so dass Wasser durch die Öffnung zu dem physikalischen Reinigungsbehälter fließt, der einen anderen Durchlass zwischen dessen Boden und dem Wassernachfüllbehälter aufweist, wobei das gefilterte Wasser durch den anderen Durchlass zum Wassernachfüllbehälter fließt.

7. Aquarium nach Anspruch 1, das zusätzlich eine Biobetröpfelungsvorrichtung aufweist, die sich auf seiner Oberseite befindet, wobei die Wasserpumpe Wasser vom Wassernachfüllbehälter zur Biobetröpfelungsvorrichtung pumpt.

8. Aquarium nach Anspruch 1, wobei die Abwasserabführvorrichtung ein Abflussmagnetventil aufweist, das durch eine Steuerschaltung geöffnet und geschlossen wird und die Wasserpumpe durch die Steuerschaltung aktiviert und angehalten wird.

9. Aquarium nach Anspruch 1, wobei der Wassernachfüllbehälter einen Wasserstandssensor und einen Wassernachfüllkanal aufweist.

10. Aquarium nach Anspruch 1, wobei der Wassernachfüllbehälter eine Medikamentendispensiervorrichtung enthält, die über einen Motor und einen Injektionskanal ein Medikament aus einem Medikamentenbehälter in den Wassernachfüllbehälter dispensiert.

11. Aquarium nach Anspruch 1, das in Schichten nach oben und unten angeordnet mehr als ein Aquarium aufweist, wobei das Aquarium in den oberen Schichten über den Abwassersammelkanal und den Überlaufkanal Wasser in das Aquarium in den unteren Schichten entsendet.

## Revendications

1. Aquarium collectant, précipitant et drainant automatiquement les eaux usées comprenant un conduit de collecte d'eaux usées et des surfaces inclinées sur son fond se dirigeant vers le conduit de collecte des eaux usées, le conduit de collecte des eaux usées s'étendant vers le haut pour former un conduit de pression d'air inférieur au niveau d'eau de l'aquarium et s'étendant vers le bas pour former un conduit de débordement inférieur au conduit de pression d'air, le conduit de débordement transportant les eaux usées qui contiennent les excréments et les substances indésirables vers un dispositif de filtrage situé sur un côté inférieur de l'aquarium, le dispositif de filtrage comportant au moins un réservoir de précipitation et d'épuration et un réservoir de réalimentation en eau, le réservoir de précipitation et d'épuration présentant un dispositif de drainage des eaux usées sur son fond et un conduit de drainage pour évacuer régulièrement les eaux usées, le réservoir de réalimentation en eau présentant un dispositif de réalimentation en eau et une pompe à eau qui envoie l'eau épurée vers un conduit de sortie d'eau sur la partie supérieure de l'aquarium.

2. Aquarium selon la revendication 1, dans lequel le conduit de collecte des eaux usées s'étend vers le bas pour former un conduit d'évacuation d'eau.

3. Aquarium selon la revendication 2, dans lequel le conduit d'évacuation d'eau contient une soupape électromagnétique de drainage qui est ouverte et fermée par un circuit de commande.

4. Aquarium selon la revendication 1, dans lequel le réservoir de précipitation et d'épuration présente une pièce d'écartement, un passage au-dessous du fond de la pièce d'écartement, et une surface inclinée se dirigeant vers le passage.

5. Aquarium selon la revendication 1, dans lequel le dispositif de filtrage présente une cuve de lavage physique entre le réservoir de précipitation et d'épuration et le réservoir de réalimentation en eau.

6. Aquarium selon la revendication 5 présentant en outre une ouverture entre la partie supérieure du réservoir de précipitation et d'épuration et la cuve de lavage physique de telle sorte que l'eau s'écoule à travers l'ouverture vers la cuve de lavage physique qui présente un autre passage entre son fond et le réservoir de réalimentation en eau, et l'eau filtrée s'écoulant à travers l'autre passage vers le réservoir de réalimentation en eau.

7. Aquarium selon la revendication 1 présentant en outre un dispositif d'égouttement bio situé sur sa partie supérieure, la pompe à eau pompant l'eau du réservoir de réalimentation en eau au dispositif d'égouttement bio.

8. Aquarium selon la revendication 1, dans lequel le dispositif de drainage des eaux usées comporte une soupape électromagnétique de drainage qui est ouverte et fermée par un circuit de commande, et la pompe à eau étant activée et arrêtée par le circuit de commande.

9. Aquarium selon la revendication 1, dans lequel le dispositif de réalimentation en eau comporte un détecteur de niveau d'eau et un conduit de réalimentation en eau.

10. Aquarium selon la revendication 1, dans lequel le réservoir de réalimentation en eau contient un dispositif de délivrance de médicament qui délivre un médicament d'un réservoir de médicament à l'intérieur du réservoir de réalimentation en eau par l'intermédiaire d'un moteur et d'un conduit d'injection.

11. Aquarium selon la revendication 1 comportant plus d'un aquarium formé en couches de haut en bas, l'aquarium sur les couches supérieures envoyant l'eau à l'intérieur de l'aquarium sur les couches inférieures à travers le conduit de collecte des eaux usées et le conduit de débordement.
